# EUROPEAN PATENT SPECIFICATION

(11) **EP 0 688 737 B1**
(45) Date of publication and mention of the grant of the patent: **30.06.1999**
(21) Application number: 94308264.4
(22) Date of filing: 09.11.1994
(51) Int. Cl.: C01B 33/18

(54) **A processing method for white carbon**
Verfahren zur Herstellung von weissem Kohlenstoff
Procédé de préparation de carbone blanc

(43) Date of publication of application: 27.12.1995
(73) Proprietor: Liang, Ju Chen, Taipei (TW)
(72) Inventor: Liang, Ju Chen, Taipei (TW)
(74) Representative: Baillie, Iain Cameron

(56) References cited:
- DE-B- 1 253 687
- DE-B- 1 283 207
- US-A- 4 377 563

## Description

### Field of the Invention

This invention relates to a processing method for white carbon, i.e. a kind of course and non-pure silicon dioxide containing over 93% of Si0₂.

### Background of the Invention

At present, the acid-base contact method is adopted for processing white carbon (with a content of silicon dioxide of over 93%). In this method water is added into sodium silicate to make it into liquid; then a certain amount of acid (such as sulphuric or hydrochloric acid) is added, and the liquid is stirred as much as possible until the liquid becomes milky (generally white in colour). After separation, a pasty substance milky white in colour is obtained. After being dried, smashed and ground, the white pasty substance becomes white and powdery, which is called white carbon. This white carbon can be used as a stiffening agent. The silicon dioxide obtained by this method is still acidic (with a pH value of 5.5 to 6.5), and contains 93-95% (in terms of weight) of SiO₂, 6% of water (in terms of weight), less than 0.1% (in weight) of chloride and less than 0.1% (in weight) of magnesium oxide and calcium oxide.

The above-mentioned acid-base contact method serves to neutralize the diluted liquid of sodium silicate by acid, such as sulphuric acid. This method has the following disadvantages. It is harmful to people and livestock since sodium silicate consists of about 50.69% of sodium oxide (Na₂O) and 49.31% of silicon dioxide, and said sodium oxide will produce much heat during its mixing with acid and alkali and disperse foul poisonous and acidic sulphur dioxide fumes. The sulphuric acid used in this method is a strong acid, which is dangerous to the people engaged in handling and operation. And the acid-alkali mixed liquid (after neutralization) causes pollution to the surroundings when it is discharged. At a time when great importance is attached to protection of the environment, this method has to be improved.

Silicon dioxide is a good stiffening agent which can be broadly used. However, since the silicon dioxide processed by the above-mentioned method is an acidic silicon dioxide (normally called white carbon), it may have anti-affinity. Products (such as tyres and paper) made by using this kind of acidic silicon dioxide may have defects such as scaling and fragileness after being used for a certain period of time.

There are several other methods and processes in addition to the above-mentioned acid-based contact processing method, but these are not widely used because of the higher cost.

### Summary of the Invention

The purpose of this invention is to provide a processing method, especially an economic method which can produce alkalescent white carbon (containing over 93% of SiO₂) in large quantity and which can improve the quality of downstream products made therefrom.

The objective of this invention is achieved by the following steps: sodium silicate is mixed with sea water at normal temperature and normal pressure and the mixture is stirred; the resulting white substance is separated; and it is processed into powdery white carbon, provided that the step of neutralizing the sodium silicate with acid is not included. The mixing proportions of sodium silicate and sea water in terms of weight are 1:50 to 1:100 with the optimum proportion being 1:60. Sodium silicate can be dissolved in fresh water before being mixed with sea water. The separated white substance can be washed with fresh water before being processed into the powdery white carbon product.

The remarkable advantages of this invention are that a great quantity of white carbon can be produced by a simple technology and at a low cost as a result of using sea water; the discharged material will not cause any pollution to the surroundings; and the quality of downstream products can be improved since the white carbon produced by this method is not acidic.

### Detailed Description of the Invention

This invention is described in detail by the following detailed description and by the attached drawing.

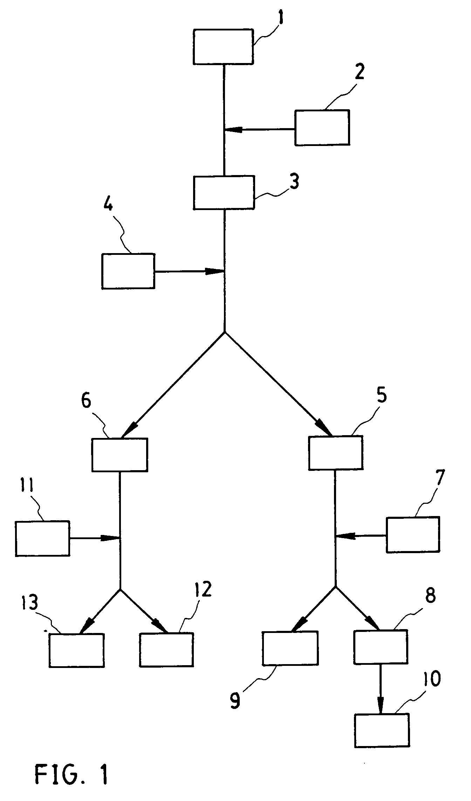

Figure 1 is a flow chart showing the processing method for white carbon described by this invention.

According to the method of the invention, sodium silicate (Na₂SiO₃) is mixed with sea water with stirring at normal temperature and normal pressure and then the resulting silicon dioxide is separated out. Preferably the sea water to be used is clean sea water containing the following (in percentages by weight) about 0.2714 weight % sulphate, about 1.9353 weight % chloride, 1.0760 weight % sodium, 0.1294 weight % magnesium, 0.0387 weight % calcium, about 0.0142 weight % potassium, about 0.0087 weight % bromine, about 0.0008 weight % strontium, about 0.0004 weight % boron and about 0.0001 weight % fluoride.

Sodium silicate (Na₂SiO₃) can be resolved into sodium oxide (Na₂O) and silicon dioxide (SiO₂).

The preferred processing method for white carbon described in this invention is shown in Figure 1. At first, fresh water 2 is added into the sodium silicate raw material 1 with stirring so as to create liquid sodium silicate 3 with adequate flowability for further processing. Then sea water 4 is added into the above mentioned liquid 3 at about 50 to 100 times (the optimum is 60 times) the weight of the sodium silicate; with as much stirring as possible. At this moment, the sodium oxide in the sodium silicate dissolves in the sea water while the silicon dioxide which does not dissolve in sea water is segregated. In other words, the liquid is kept still after having been stirred which creates a separable white substance 5 and sea water containing sodium oxide 6. This white substance 5 is silicon dioxide and a small amount of residual sodium oxide.

Fresh water 7 is then added into the above-mentioned white substance 5 with stirring so as to wash it. Since sodium oxide dissolves in water while silicon dioxide does not, the remaining sodium oxide can be eliminated by this addition of fresh water. As a result, pure white substance 8 can be separated out leaving water solution 9. White substance 8 is further processed into white carbon 13 containing silicon dioxide of very high purity while the water solution 9 will contain residual dissolved sodium oxide and other substances. This white carbon forms a pure and clean white substance containing silicon dioxide of very high purity. Tests show that the pH value of this substance is slightly alkalescent. By using conventional methods of dewatering, drying, smashing and grinding to further process the above-mentioned pure and clean white substance 8, the white carbon product 10 can be obtained. Nevertheless, this pure and clean white substance 8 can also be processed to get powder-like white carbon product 10 by using other conventional methods.

Since the sea water containing sodium oxide 6 comprises sea water, fresh water and a certain amount of sodium oxide, the sodium oxide can be easily captured by the experienced chemist for further processing. Hereunder, a method is recommended:

Dodecyl benzenesulfonic acid 11 may also be added to the above-mentioned sea water containing sodium oxide 6 and stirred, and the dodecyl benzenesulfonic and sodium oxide will combine to produce sodium dodecylbenzene sulfonate 12. In this way, the side product, sodium dodecylbenzene sulfonate 12, may be produced so as to cut down the cost of the processing method of this invention. This sodium dodecylbenzene sulfonate can be used in detergent refining. The end liquid 13 which is separated from the dodecylbenzene sulfonate 12 is similar to sea water but can not be recycled and reused. However, the end liquid 13 which is separated in this way is clean and non-poisonous.

It has been discovered, through repeated tests, that the silicon dioxide inside the sodium silicate can be fully separated only if one portion of sodium silicate is mixed by stirring with over sixty portions of sea water. If the sea water is only 40 to 50 times that of the sodium silicate, there will be some, although incomplete, separation of silicon dioxide. The presence of the milky white colour indicates the separation of silicon dioxide. However, the weight of the wet and white silicon dioxide after dewatering will decrease progressively with the reduction of the amount of the sea water, as shown in Table 1. If clean sea water is added into the waste liquid in the separating machine with stirring, then there will still be the reaction in which milky silicon dioxide floats to the top of the waste liquid (after leaving to become stationary) and white silicon dioxide can still be separated with decreased amount. If one portion of sodium silicate is added with two portions of sea water and stirred, there will be no reaction at all, i.e. there will be no production of milky white reactant, and no white substance will remain on the filter paper after dewatering. That means the critical point from which the silicon dioxide can be fully separated from sodium silicate is to add sea water which is 60 times that of sodium silicate.

### Examples

60, 80 or 100 portions of sea water were added into one portion of sodium silicate before mixing, leaving to stand and dewatering. White and wet silicon dioxide was produced, the weight of which was very close to the weight of silicon dioxide (49.31% in weight) contained in sodium silicate. Therefore the weight proportion of the mixture between sodium silicate and sea water should be 1:50 to 1:100 with the optimum one of 1:60. In other words, when one portion of sodium silicate is mixed with 60 portions of sea water (in terms of weight), almost 100% of the silicon dioxide contained in sodium silicate can be separated.

**Table 1**

| Reaction Results of One Portion of Sodium Silicate Mixed with Different Portions of Sea Water (in Terms of Weight) | | | | | | | | | | |
|---|---|---|---|---|---|---|---|---|---|---|
| Portions of Sea Water | 5 | 10 | 20 | 30 | 40 | 50 | 60 | 80 | 100 | 200 |
| % of wet SiO₂ to be separated | 0.13 | 0.48 | 0.98 | 1.80 | 2.25 | 2.64 | 2.910 | 2.910 | 2.910 | 2.910 |
| % of dry SiO₂ to be separated | 0.03 | 0.08 | 0.18 | 0.30 | 0.380 | 0.440 | 0.485 | 0.485 | 0.485 | 0.485 |

As mentioned above, the procedure is to dilute the raw material of sodium silicate first, then to mix it with sea water and stir to produce the white substance, which can be processed into white carbon. When the white carbon is used for some products which do not have strict requirements on pH value, no washing is necessary.

In summary, this invention takes sodium silicate as the raw material, mixes it with an adequate amount of sea water, then an alkalescent white carbon can be finally separated. Furthermore, the water containing sodium oxide 6 contains a certain amount of sodium oxide which can be easily captured by the experienced chemist to produce a valuable byproduct. If the sea water containing the dissolved sodium oxide is added with dodecyl benzenesulfonic acid with stirring, then the dodecyl benzenesulfonic acid will be combined with the sodium oxide to create sodium dodecylbenzene sulfonate. Thus the side product, sodium dodecylbenzene sulfonate, can be easily obtained.

## Claims

1. A method for preparing white carbon, comprising the following steps:
i) mixing and stirring sodium silicate and sea water at normal temperature and normal pressure;
ii) allowing a white substance to be formed;
iii) further processing said white substance to obtain the powdery white carbon product,
wherein the method does not include the step of neutralizing the sodium silicate with acid.

2. A method of claim 1 wherein said sodium silicate is first dissolved in fresh water before said mixing and stirring of said sodium silicate and sea water.

3. A method of any preceding claim wherein the white substance created as a result of the reaction of sodium silicate and sea water is washed with fresh water before it is further processed into said powdery white carbon product.

4. A method of any preceding claim wherein said white carbon is alkalescent white carbon containing over 93% SiO₂.

5. A method of any preceding claim wherein the mixing proportions of said sodium silicate and said sea water by weight are 1:50 to 1:100.

6. A method of claim 5 wherein said mixing proportions are 1:60 to 1:100.

## Patentansprüche

1. Verfahren zum Herstellen von weißem "Carbon", umfassend die folgenden Schritte:
(i) Mischen und Rühren von Natriumsilicat und Seewasser bei normaler Temperatur und normalem Druck,
(ii) eine weiße Substanz bilden lassen;
(iii) weiterverarbeiten der weißen Substanz, um ein pulveriges weißes "Carbon"-Produkt zu erhalten;
welches Verfahren nicht die Schritte des Neutralisierens des Natriumsilicats mit Säure umfaßt.

2. Verfahren nach Anspruch 1, bei welchem das Natriumsilicat zuerst in frischem Wasser vor dem Mischen und Rühren des Natriumsilicats aufgelöst wird.

3. Verfahren nach einem der vorgenannten Ansprüche, bei welchem die weiße Substanz, die als Folge der Reaktion von Natriumsilicat und Seewasser erzeugt wird, mit frischem Wasser gewaschen wird, bevor sie zu dem weißen pulverigen "Carbon"-Produkt weiterverarbeitet wird.

4. Verfahren nach einem der vorgenannten Ansprüche, bei welchem das weiße "Carbon" schwach alkalisch ist und mehr als 93 % SiO₂ enthält.

5. Verfahren nach einem der vorgenannten Ansprüche, bei welchem die Mischanteile des Natriumsilicats und des Seewassers auf Gewicht bezogen 1:50 ... 1:100 betragen.

6. Verfahren nach Anspruch 5, bei welchem die Mischanteile 1:60 ... 1:100 betragen.

## Revendications

1. Procédé de préparation du carbone blanc, comprenant les étapes suivantes :
i) mélanger et agiter du silicate de sodium et de l'eau de mer à une température normale et à une pression normale ;
ii) autoriser une substance blanche à se former ;
iii) traiter ensuite la substance blanche pour obtenir un produit en poudre de carbone blanc,
dans lequel le procédé ne comprend pas l' étape de neutraliser le silicate de sodium avec un acide.

2. Procédé selon la revendication 1, dans lequel le silicate de sodium est d'abord dissout dans de l'eau fraîche avant de mélanger et d'agiter ledit silicate de sodium et l'eau de mer.

3. Procédé selon l'une des revendications précédentes, dans lequel la substance blanche obtenue en tant que résultat de la réaction du silicate de sodium et de l'eau de mer est lavée avec de l'eau fraîche avant de la traiter ensuite en produit en poudre du carbone blanc.

4. Procédé selon l'une des revendications précédentes, dans lequel le carbone blanc est du carbone blanc alcalescent contenant plus de 93 % de SiO₂.

5. Procédé selon l'une des revendications précédentes, dans lequel les proportions en poids du mélange silicate de sodium et eau de mer sont comprises entre 1:50 et 1:100.

6. Procédé selon la revendication 5, dans lequel les proportions du mélange sont comprises entre 1:60 et 1:100.
